(19) **Europäisches Patentamt**
**European Patent Office**
**Office européen des brevets**

(11) **EP 1 805 011 B1**

(12) **EUROPEAN PATENT SPECIFICATION**

(45) Date of publication and mention
of the grant of the patent:
**13.01.2010 Bulletin 2010/02**

(51) Int Cl.:
**B32B 27/12** ^(2006.01)

(21) Application number: **05763771.2**

(22) Date of filing: **28.06.2005**

(86) International application number:
**PCT/US2005/022826**

(87) International publication number:
**WO 2006/049660 (11.05.2006 Gazette 2006/19)**

(54) **DISPOSABLE FOOD PREPARATION MATS, CUTTING SHEETS, PLACEMATS, AND THE LIKE**

WEGWERFMATTEN ZUR ZUBEREITUNG VON LEBENSMITTELN, SCHNEIDFLÄCHEN,
PLATZDECKCHEN UND DERGLEICHEN

TAPIS JETABLES POUR PREPARATIONS ALIMENTAIRES, FEUILLES DE DECOUPE,
NAPPERONS ET ANALOGUE

(84) Designated Contracting States:
**DE FR GB IT**

(30) Priority: **29.10.2004 US 977486**

(43) Date of publication of application:
**11.07.2007 Bulletin 2007/28**

(73) Proprietor: **KIMBERLY-CLARK WORLDWIDE, INC.**
**Neenah, WI 54956 (US)**

(72) Inventors:
• **BEHM, Richard, J.**
**Appleton, Wisconsin 54911 (US)**
• **SOREBO, Heather, Anne**
**Appleton, Wisconsin 54913 (US)**
• **HINES, Elizabeth, Anne**
**Greenville, Wisconsin 54942 (US)**
• **SHANNON, Thomas, G.**
**Neenah, Wisconsin 54956 (US)**
• **JOHNSON, Jeffrey, J.**
**Neenah, Wisconsin 54956 (US)**

• **SKOOG, Henry**
**Roswell, Georgia 30075 (US)**
• **CHEN, Fung-jou**
**Appleton, Wisconsin 54915 (US)**
• **LINDSAY, Jeffrey, Dean**
**Appleton, Wisconsin 54915 (US)**

(74) Representative: **Davies, Christopher Robert**
**Frank B. Dehn & Co.**
**St Bride's House**
**10 Salisbury Square**
**London**
**EC4Y 8JD (GB)**

(56) References cited:
**EP-A- 0 265 684      WO-A-02/28577**
**FR-A- 2 319 489      GB-A- 2 119 709**
**US-B1- 6 274 232**

• **PATENT ABSTRACTS OF JAPAN vol. 1998, no. 06, 30 April 1998 (1998-04-30) & JP 10 033396 A (SYST CRAFT:KK), 10 February 1998 (1998-02-10)**

EP 1 805 011 B1

**Description**

## BACKGROUND OF THE INVENTION

During the preparation of meals or of a particular dish, foods are typically defrosted, cut, chopped, sliced, or otherwise manipulated. These operations typically occur on a countertop or other hard surface. During food preparation, cleanliness is important not only for maintaining a clean workspace but also to prevent against cross contamination of the food items.

In the past, many of the above described food preparation steps have occurred on a cutting board, over a paper towel, or directly on a countertop surface. The cutting boards or countertop surface, however, must be cleaned after each use. Paper towels may be useful in absorbing excess liquid or juices. Paper towels, however, allow the liquids or juices to strike through the product and contaminate any surface on which the paper towel is placed.

In view of the above, a need currently exists for a disposable product that can be used to prepare meat and other raw or cooked foods. In particular, a need exists for a disposable food preparation mat or sheet that is capable of absorbing liquids from the food, while preventing penetration of the liquids to the surface on which the mat rests. There is also a need for some food preparation that the mat is absorbent and has a degree of cut resistance.

There is also a need for a disposable food preparation mat that may be produced in a rolled form, similar to a roll of paper towels. For example, a need exists for a food preparation mat that is flexible and non-ridged such that multiple sheets may be spirally wound into a product so as to minimize the amount of storage area required for the product and increase the ease of disposal. A prior art processing substrate having the features of the preamble of claim 1 is disclosed in WO02/28577 A1.

## SUMMARY OF THE INVENTION

There is provided, according to the present invention, a rolled absorbent product as claimed in claim 1.

In general, the present invention is directed to fluid absorbent mats. The mats can be used in numerous applications. For example, in one embodiment, the mats can be used during food preparation in order to absorb and retain excess liquid or juices that may arise, for instance, when food is defrosted, cut, chopped, sliced, or otherwise manipulated. When cutting, chopping or slicing is required during food preparation, cut resistance is also required in addition to absorbency. In addition to food preparation applications, the mats are also well suited for chemical spill absorption, blood, urine or other body fluid absorption or any other similar application. The mats may also be decorated with graphics to improve their aesthetic appearance. In this manner, the mats are also well suited for use as placemats at a dinner table.

For many applications, the fluid absorbent mats of the present invention are intended to be disposable and thus discarded after a single or multiple uses. The fluid absorbent mats of the present invention are contained on a spirally wound roll. The roll may contain a plurality of mats that are separated, for instance, by a perforation line that allows a user to remove one mat from the roll at a time.

The present disclosure is directed to a rolled absorbent product comprising a plurality of spirally wound interconnected fluid absorbent sheets. While not overly critical to the invention, the size of the concentrically wound roll -may approximate the dimensions of a standard roll of paper toweling, having an outer roll length (sheet width) dimension of from about 8" (20.32 cm) to about 14" (35.56 cm) and a diameter of from about 3" (7.62 cm) to about 9" (22.86 cm). The length of the sheet on the roll is determined by the particular diameter of the roll and the caliper of the sheet. In this manner the consumer may find the product advantageous to use as a regular paper towel as well as other purposes such as a food preparation mat.

The sheets include a first hydrophilic and fluid absorbent layer and a second fluid impervious layer. The first layer of the sheets may have a HST (Hercules Size Test) value, for instance, of less than about 5 seconds, while the second layer of the sheets may have a HST value of greater than about 1 minute, such as greater than about 4 minutes. The composite sheet, has an HST value of greater than about 1 minute. In a spirally wound arrangement, the fluid absorbent sheets may have a relatively small caliper, such as less than about 1,000 microns. For example, in one embodiment, the caliper of the sheets may range from about 40 microns to about 800 microns. The basis weight of the sheets, on the other hand, may be less than about 400 gsm, such as from about 5 gsm to about 100 gsm, such as from about 10 gsm to about 80 gsm.

The fluid absorbent layer and the fluid impervious layer contained within the absorbent sheets may vary depending upon the particular application and the desired result. Further, the sheets may be constructed from a single ply in which the layers are stratified over the thickness of the ply. In other embodiments, however, the absorbent sheets may comprise laminates in which the fluid absorbent layer comprises a first ply that is adhered or connected to the fluid impervious layer which may comprise a second ply.

As described above, in one embodiment, the fluid absorbent layer may comprise a tissue web. The wet laid tissue web can be formed by any of a variety of papermaking processes known in the art. For example, the tissue web may be formed utilizing adhesive creping, wet creping, double creping, double re-creping, embossing, wet-pressing, air-pressing, through-air drying, creped through-air drying, uncreped through-air drying, as well as other steps known in the art. In addition to the above, the fluid absorbent layer may also comprise an airlaid web made from, for instance, fluff pulp and/or other cellulosic fibers such as cotton or rayon fibers. The fluid absorbent layer may also comprise a coform web or a hydroentangled web. For many applications, the fluid absorbent layer should have a specific absorbent capacity of greater than about 1 gram water to gram mass, such as greater than about 2 grams water per gram mass. In one embodiment, for instance, the absorbent capacity of the fluid absorbent layer may be greater than about 4 grams water per gram mass.

The fluid impervious layer may comprise a nonwoven or a film. The film may be made from any suitable polymeric material, such as polyethylene, polypropylene, nylon, TEFLON, PEEK, polyphenylene sulfide and the like. Hydrophobic nonwoven webs that may be used as the fluid impervious layer comprise meltspun webs, such as meltblown webs, spunbond webs, hydroentangled webs, and the like. If desired, the meltspun nonwoven web may be hot calendered in order to further decrease the liquid permeable properties of the material.

Particular examples of fluid absorbent sheets made in accordance with the present invention include a film laminated to an uncreped through-air dried highly textured web. Uncreped through air dried tissues such as that described in U.S. Patent Nos. 5,672,248; 5,656,132; 6,120,642; 6,096,169; 6,197,154; 6,143,135 are found to have better bulk, greater wet resiliency and higher specific absorbent capacity than traditional wet pressed tissue products. Thus, less cellulose fiber is needed to maintain specific absorbent capacity. In addition, the ability to impart a 3 dimensional pattern into the tissue provides the opportunity to increase the specific absorbent capacity of the sheet when laminated to a fluid impervious layer. The excellent wet resiliency of the sheet allows the sheet to retain its 3-D form rather than collapsing into the voids between the film and the fiber surfaces.

In another embodiment, the fluid absorbent sheet may comprise an airlaid web laminated to a film such as a polyolefin. In still another embodiment, the sheet may comprise a hydroentangled web laminated to any suitable film. In still another embodiment the sheet may comprise a highly debonded sheet comprising a latex binder. The sheet is then preferably creped after application of the binder to one or both sides of the sheet. Such sheets are described in U.S. Patent Application Nos. 10/192,781, filed July 10, 2002; 10/447,321, filed May 28, 2003; 10/326,915, filed December 20, 2002; 10/382,222, filed March 5, 2003; 10/319,415, filed December 13, 2002; 10/654,219, filed on September 2, 2003; 10/654,289, filed on September 2, 2003; and 10/749,475, filed December 31, 2003. Such sheets are found to be very drapable having very low stiffness and high bulk softness. Such sheets are widely recognized for their clothlike texture. While the absorbent capacity of such sheets tends to be lower than the absorbent capacity of sheets made with through air dried tissue such products have a much more clothlike feel and may be preferred for higher end applications such as disposable placemats.

The hydroentangled web or the highly debonded sheet printed with a latex or acrylate binder can be laminated to the sheet by a latex or acrylate adhesive using Flexographic printing or through cast or extrusion of the polymeric film directly on the webs described above.

In addition to comprising two layers or two plies, the fluid absorbent sheets contains further plies and/or layers. A fluid absorbent layer is positioned between the fluid impervious layer and a top, apertured layer. The apertured layer may be present in order to reduce the tendency of liquids to migrate back to the top surface of the product after being absorbed. The apertured layer may comprise an apertured film. The apertures, for example, may have an opening area greater than about 0.5 mm$^2$. The ratio of apertured area to non-apertured area can range from about 0.1 to about 0.9, such as from about 0.2 to about 0.8.

In an arrangement not according to the present invention, the fluid absorbent sheet may comprise a fluid impervious layer positioned in between a first fluid absorbent layer and a second fluid absorbent layer which allows either side of the sheet to be used for absorbing fluids. The first fluid absorbent layer may have the same or different properties than the second fluid absorbent layer depending upon the particular application.

The spirally wound product may include periodically spaced perforation lines for separating the individual sheets. Alternatively, the spirally wound product may be housed in a container that includes a cutting edge for allowing the user to select the sheet length as desired.

The fluid absorbent sheets may contain various additives for improving various properties of the sheets. For example, the fluid absorbent sheets may contain antimicrobial agents, odor absorbing agents, and the like. In one embodiment, the fluid absorbent sheet may also include a fluid barrier that surrounds at least a portion of the perimeter of each sheet. The fluid barrier may serve to contain all fluids within the sheet. The fluid barrier may comprise, for instance, superabsorbent particles. In an alternative embodiment, the fluid barrier may comprise a liquid impervious adhesive material that has been placed around the perimeter of the product.

Various other features and aspects of the present invention are discussed in greater detail below.

## BRIEF DESCRIPTION OF THE DRAWINGS

A full and enabling disclosure of the present invention, including the best mode thereof to one skilled in the art, is set forth more particularly in the remainder of the specification, including reference to the accompanying figures, in which:

Figure 1 is a perspective view of a spirally wound absorbent product not made in accordance with the present invention;

Figure 2 is a perspective view of a fluid absorbent sheet not made in accordance with the present invention;

Figure 3 is a perspective view of another fluid absorbent sheet not made in accordance with the present invention;

Figure 4 is a perspective view of an embodiment of a fluid absorbent sheet made in accordance with the present invention;

Figure 5 is a perspective view with cutaway portions of another fluid absorbent sheet not made in accordance with the present invention;

Figure 6 is another fluid absorbent sheet not made in accordance with the present invention;

Figure 7 is a perspective view illustrating a spirally wound product made in accordance with the present invention positioned in a container that includes a cutting edge;

Figure 8 is a perspective view of a fluid absorbent sheet made; and

Figure 9 is a perspective view of a fluid absorbent sheet.

Repeat use of reference characters in the present specification and drawings is intended to represent the same or analogous features or elements of the present invention.

## DEFINITIONS

As used herein, the term "hydroentangled web" refers to a high pulp content nonwoven composite fabric. The composite fabric contains more than 50%, such as more than 70%, by weight pulp fibers which are hydraulically entangled into a continuous filament substrate, such as a spunbond substrate. Examples of hydroentangled webs are disclosed in U.S. Patent No. 5,284,703.

As used herein, the term "spunbond fibers" refers to small diameter fibers of molecularly oriented polymeric material. Spunbond fibers may be formed by extruding molten thermoplastic material as filaments from a plurality of fine, usually circular capillaries of a spinneret with the diameter of the extruded filaments then being rapidly reduced as in, for example, U.S. Pat. No. 4,340,563 to Appel et al., and U.S. Pat. No. 3,692,618 to Dorschner et al., U.S. Pat. No. 3,802,817 to Matsuki et al., U.S. Pat. Nos. 3,338,992 and 3,341,394 to Kinney, U.S. Pat. No. 3,502,763 to Hartman, U.S. Pat. No. 3,542,615 to Dobo et al, and U.S. Pat. No. 5,382,400 to Pike et al. Spunbond fibers are generally not tacky when they are deposited onto a collecting surface and are generally continuous. Spunbond fibers-are often about 10 microns or greater in diameter. However, fine fiber spunbond webs (having an average fiber diameter less than about 10 microns) may be achieved by various methods including, but not limited to, those described in commonly assigned U.S. Pat. No. 6,203,669 to Marmon et al. and U.S. Pat. No. 5,759,926 to Pike et al..

The "Hercules Size Test" is a measure of absorbency. The test measures the time required for the reflectance of a material to decrease to a predetermined value as a dye solution penetrates through the materials. Results are reported in seconds, with values less than about 5 indicating a reasonably absorbent product. Materials with low absorbency characteristics typically have values greater than 1 minute. Liquids impermeable products, such as films, have very high values.

As used herein, the term "coform web" refers to a material produced by combining separate polymer and additive streams into a single deposition stream in forming a nonwoven web. Such a process is taught, for example, by U.S. Patent No. 4,100,324 to Anderson, et al.

As used herein, the term "geometric mean tensile modulus" is calculated as follows. Specimens are tested in a standard tensile tester. A 3 inches (7.62 cm) jaw width, a jaw span of 4 inches (10.16 cm) and a crosshead speed of 10 inches (25.4 cm) per minute is used after maintaining the sample under TAPPI conditions for 4 hours before testing. The load cell is chosen such that the majority of the peak load results fall between 10% and 90% of the capacity of the load cell.

Tensile energy absorbed (TEA) at break is the integral of the force produced by a specimen with its elongation up to the defined break point (65% drop in peak load), divided by the face area of the specimen. The face area is the slack-corrected gage length times the specimen width.

The MD and CD slope is also referred to as the tensile modulus. It is the slope of the stress strain curve between 46 g and 103 g of force. The geometric mean modulus is the square root of the product of the MD and CD slopes.

## DETAILED DESCRIPTION

It is to be understood by one of ordinary skill in the art that the present discussion is a description of exemplary embodiments only, and is not intended as limiting the broader aspects of the present invention.

In general, the present disclosure is directed to fluid absorbent mats that may be used in various and sundry applications. The mats include a liquid absorbent layer and a liquid impervious layer. The two layers may be combine in a single ply or may comprise separate plies that are laminated together either alone or in combination with further plies.

The fluid absorbent mats of the present invention are particularly well suited for use in food preparation applications. For example, the mats are configured to absorb and capture excess liquid or juices that may be generated during the defrosting, preparing, cutting, chopping or slicing of foods. The liquid absorbent mat, for instance, may be used as a surface to season, remove fat; or prepare hamburger patties from meat products. The liquid absorbent mats are also well suited in various applications for cutting and chopping fruits and vegetables. Of particular advantage, the mats are configured to quickly absorb liquids while preventing the liquids from escaping from the product or striking through the product.

In addition to food preparation operations, the liquid absorbent mats of the present invention may also be used in various other applications. For instance, the liquid absorbent mats may be used for chemical spill absorption, blood or urine pickup or may be used in various other wiping applications. The mats are also capable of receiving embossments and/or graphics making them visually appealing for use as placemats.

In an arrangement not within the scope of the present invention, the liquid absorbent mats may be packaged individually such as in a stacked arrangement. The mats are interconnected and spirally wound together. The mats may have a relatively small caliper and a high bending modulus. For instance, in one arrangement, the overall caliper of the product can range from about 20 microns to about 1,000 microns, such as from about 40 microns to about 800 microns. In one particular arrangement, for example, the caliper of the mats may range from about 60 microns to about 600 microns. Within the above caliper range, the liquid absorbent mats may have a basis weight of from about 3 gsm to about 400 gsm, such as from about 5 gsm to about 100 gsm, more specifically from about 10 gsm to about 80 gsm.

In an arrangement not according to the present invention, where the liquid absorbent mats are not intended to be in a spirally wound relationship, the mats may have a much higher caliper and basis weight than the ranges provided above. For instance, the caliper of the mats may range from about 1 mil (0.025 cm) to about 100 mils (2.54 cm), such as from about 5 mils (0.127 cm) to about 50 mils (1.27 cm). The thickness and basis weight will vary greatly depending upon the resulting application. For example, placemats and food preparation mats, that only offer the absorbent top layer and leak proof bottom layer, may have a caliper of from about 3 mils (0.076 cm) to about 30 mils (0.762 cm), while food preparation mats particularly designed for absorbency and cutting, chopping or slicing foods may have a caliper of from about 10 mils (0.25 cm) to about 100 mils (2.54 cm).

As described above, the liquid absorbent mats at least include a liquid absorbent layer and a liquid impervious layer. For example, the liquid absorbent layer may have a Hercules Size Test (HST) value of less than about 5 seconds, while the liquid impervious layer may have a HST value of greater than about 1 minute, such as greater than about 2 minutes. For example, in one embodiment, the liquid impervious layer may have a HST value of greater than about 4 minutes.

Many different materials may be used in order to construct the liquid absorbent layer and the liquid impervious layer. For some applications, for instance, materials may be chosen for the liquid absorbent layer such that the layer has a liquid absorbent capacity of at least one gram water per gram mass, such as greater than about 2 grams water per gram mass or even greater than about 4 grams water per gram mass. The liquid absorbent layer can also be configured to have high Z-directional tensile to resist sloughing and linting of fibers onto any items brought into contact with the mats such as a food product. In one embodiment, for instance, the Z-directional tensile of the layer may be greater than about 4 psi, such as greater than about 8 psi, and even greater than about 12 psi.

Examples of materials that may be used to form the liquid absorbent layer include wetlaid tissue webs, airlaid webs, coform webs, hydroentangled webs, and the like. When formed from a wetlaid tissue web, the paper web may be formed from various processes known in the art. For example, the tissue web may be formed from processes that include creping, wet creping, double creping, embossing, wet-pressing, air-pressing, through-air drying, creped through-air drying, uncreped through-air drying, as well as other various conventional steps. The paper web may also be subjected to a double print crepe process or subjected to a single print crepe process in which a bonding material is applied to at least one side of the web according to a pattern, adhered to a creping surface, and then creped from the surface.

The liquid impervious layer, on the other hand, may be formed from a film or a nonwoven. The nonwoven, for example, may be constructed so as to have a HST value that falls within the above described ranges. The nonwoven web may be, for instance, a meltspun web or a hydroentangled web.

When the liquid impervious layer comprises a film, in general, any suitable film may be used. The film may be made from, for example, a homopolymer, a copolymer, a blend of polymers or a multi-layered film. In one embodiment, for instance, the film may contain a polyolefin such as polyethylene or polypropylene. In an alternative embodiment, the polymer film may contain a NYLON (polyamide), a fluoropolymer, PEEK, polyphenylene sulfide, and mixtures thereof. The above polymers may be well suited to applications where the absorbent mat is used also as a cutting surface. In another embodiment, the film may comprise or have a layer of high coefficient of friction polymer (such as a block copolymer, i.e. SEB-S block copolymer) on one side of the film to impart a non-slip attribute to the mat. A non-slip feature is especially important for a food prep mat designed for cutting, chopping or slicing food to help keep the mat from moving about the counter while cutting food.

The film may have a thickness that varies greatly depending upon the particular application. For example, in one embodiment, the film may have a thickness of less than 1 mil (0.025 cm) to greater than 30 mils (0.762 cm) such as from about 0.5.mil (0.013 cm) to about 5 mils (0.127 cm). The basis weight of the polymeric film can likewise vary over a wide range. For example, the basis weight may range from about 5 gsm to about 100 gsm such as from about 5 gsm to about 50 gsm. For spirally wound products the basis weight of the film is preferably less than about 30 gsm and the thickness of the film is preferably less than about 4 mils (0.004") (0.102 cm). Lower calipers tending to reduce the stiffness of the product and facilitate utilization as a rolled product giving the consumer the impression of a standard paper towel product.

In one embodiment, there may be advantages to using a film that has a relatively high opacity. Clear film laminates may give the impression to the user of being wet during use even though fluids are prevented from passing through the film. A film having a relatively high opacity, on the other hand, provides a visual cue to the user that fluid strikethrough has not occurred. Opacity represents a substrate's light blocking ability. It is primarily used as a property of paper and predicts the relative visibility on one side of the paper of the images that exist on the other side. The opacity of polymer films is typically measured using the same procedure, TAPPI procedure T 425 and ASTM procedure D 589. There two different ways to report opacity the more common being the "89% reflectance backing," also called "contrast ratio." This value is equal to 100 times the ratio of the diffuse reflectance of a film sample backed by a black body (<.5% reflectance) to the diffuse reflectance of the same sample backed by a white body (89% reflectance). The units are percent, and a perfectly opaque material will have an opacity value of 100%. The opacity of the film, for instance, may be greater than about 40%, such as greater than about 50%. In one particular embodiment, for example, the opacity of the film may be greater than about 60%.

In other embodiments it may be preferred or sufficient to use translucent films. Translucent films are measured by a haze value and not opacity. Haze is the-scattering of light by a film that results in a cloudy appearance or poorer clarity of objects when viewed through the film. More technically, haze is the percentage of light transmitted through a film that is deflected more than 2.5° (degrees) from the direction of the incoming beam. A unidirectional perpendicular light beam is directed onto the film specimen, and a photo detector measures the total light transmitted by the specimen after it enters an integrating sphere. Testing for haze in films should be done by a method such as ASTM D-1003 or equivalent. A spectrophotometer may also be used provided that it meets the requirement of ASTM D-1003. Translucent films suitable for the present invention may have haze values greater than 10% such as greater than 20%. In one specific embodiment the film may be diffusing, having a haze value greater than 30%.

Transparent films may also be used to satisfaction in the present invention. Such films will have haze values less than 10% such as less than 5% and specifically less than 3% when measured by ASTM D-1003 or equivalent.

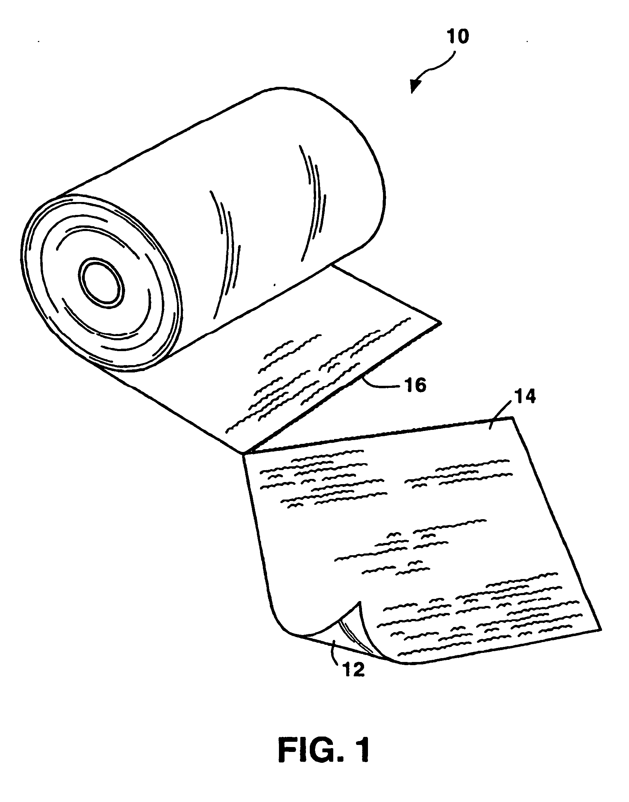

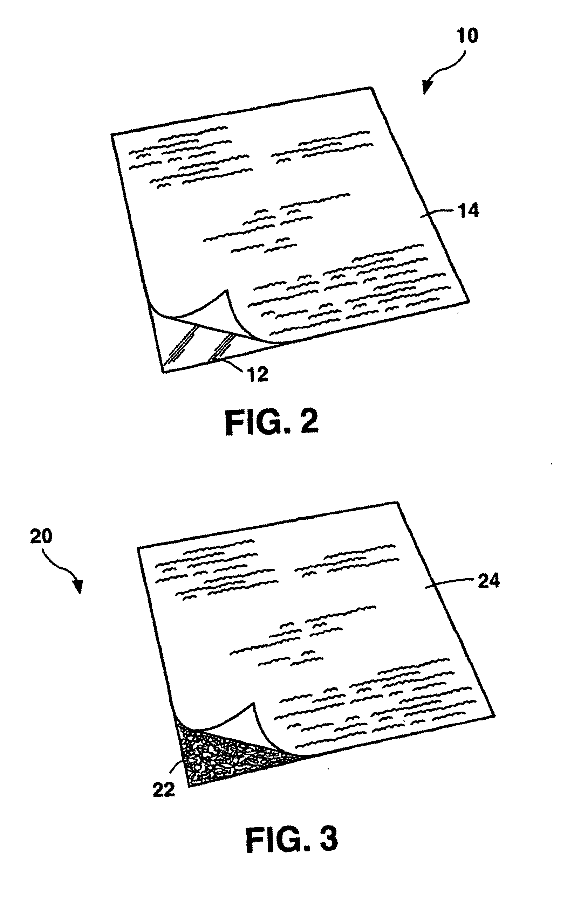

Referring to the figures, various liquid absorbent mats or sheets are shown. For example, referring to **Figs. 1** and **2,** a liquid absorbent mat generally **10** is shown that comprises a laminate of a film **12** to a liquid absorbent web **14.** As shown in **Fig.1,** the liquid absorbent mat **10** comprises a spirally wound product. The spirally wound product or roll of material may periodically include perforation lines **16** for separating individual liquid absorbent mats from the remainder of the roll. In other arrangements within the scope of the present invention the mats may be packaged in a stacked arrangement. Whether or not the mats are spirally wound may depend upon the caliper of the product, the bending modulus of the product and the basis weight.

The dimensions of the roll are preferably controlled to give the perception of equivalence to current paper towel products. By controlling the dimensions of the roll of the spirally wound product the consumer is better able to locate the product within their current environment where commercially available paper towels are located. In fact, the consumer may find that the products of the present invention meet all the needs of currently available spirally wound paper towel products and may be inclined to replace the currently available products with those of the present invention in their entirety. Spirally wound products of the present invention preferably have an outer roll length (sheet width) dimension of from about 6" (15.24 cm) to about 14" (35.56 cm), such as from about 8" (20.32 cm) to about 12" (30.48 cm) and a roll diameter of from about 3" (7.62 cm) to about 9" (22.86 cm), such as from about 5" (12.7 cm) to about 8" (20.32 cm). The total length of all sheets on the roll is determined by the particular diameter of the roll and the caliper of the sheet. In one embodiment the total sheet length on the roll can range from about 20 feet (6.10 m) to about 120 feet (36.58 cm) such as from about 30 feet (9.14 m) to about 100 feet (30.48 m) and more specifically from about 40 feet (12.20 m) to about 100 feet (30.48 m).

It may be preferable to have the absorbent side facing the outside of the roll. In this manner the consumer will have visual contact with the absorbent side and will be more likely to perceive the roll as being paper towel like and, hence, more apt to use said product for applications served by conventional spirally wound paper towel product. In one embodiment, it is preferred to have the spirally wound product located on a core, however this is not a necessity of the invention. The core may be made from a variety of materials such as cardboard. The cores may have any dimension but in general will have a diameter of from about 1" (2.54 cm) to about 2.5" (6.35 cm) being similar in shape and dimension to cores used in commercially available spirally wound paper towel products.

The liquid absorbent layer 14 and the film layer 12 of the mats 10 as shown in **Figs. 1** and **2** can be constructed from any suitable combination of materials as described above. For instance, the liquid absorbent layer **14** may comprise a tissue web made primarily from cellulosic fibers. For example, the tissue web may comprise an uncreped through-air dried web. Uncreped through air dried tissues such as that described in U.S. Patent No. 5,656,132 are found to have better bulk, greater wet resiliency, greater absorbent rate and higher specific absorbent capacity than traditional wet pressed tissue products. Thus, less cellulose fiber and fewer plies are needed to maintain a given specific absorbent capacity.

It would be expected that the specific fiber absorbent capacity would increase with lamination of the fiber web to an impervious layer. The specific fiber absorbent capacity refers to the amount of fluid in grams that the products of the present invention can hold per gram of absorbent fiber in the product. It is most applicable to products having an absorbent layer comprising primarily cellulosic fibers laminated to a polymeric film fluid impervious layer. Water or fluid becomes trapped in the void areas between the fiber web and the fluid impervious layer. In the absence of the fluid impervious layer, this fluid merely transfers to the surface in contact with the web or simply drains off the web.

When used in a spirally wound product the absorbent layer preferably exhibits good wet resiliency. Wet resiliency refers to the ability of the sheet to not collapse when wetted. The sheet therefore retains its 3-dimensional shape in the presence of water. While not wishing to be bound by theory, it is believed that three factors interact synergistically to yield unusually high wet resiliency performance: (1) a high bulk (low density) three-dimensional structure obtained without significant compression during drying and preferably obtained without creping, (2) high yield pulp fibers, preferably comprising at least about 20 percent of the fiber furnish used to make the sheet; and (3) the use of one or more wet strength resins or agents such that the wet to dry geometric mean tensile strength ratio is about 0.1 or greater. More information about wet resiliency can be found in U.S. Patent No. 6,808,790 82 entitled "Wet-resilient webs and disposable articled made therewith" by Chen et.al and issued October 26, 2004.

While not wishing to be bound by theory it is believed that wet resiliency of the sheet allows the sheet to retain its 3-d form rather than collapsing into the voids between the film and the fiber surfaces. As a result, water or other fluids become trapped in the void volume between the fluid impervious layer and the surface of the sheet facing the impervious layer but not substantively affixed to that layer. If a conventional wet pressed tissue sheet is used, these void areas rapidly collapse and can not serve to provide additional absorbent capacity. As such, when the absorbent layer of the products of the present invention comprises a material having high wet resiliency the fiber absorbent capacity of the product, expressed in grams fluid per gram of fiber, will be greater than using a conventional wet pressed tissue sheet. Highly texturized surfaces having a significant 3-d structure can be utilized to further increase the fiber absorbent capacity. Thus less fiber is required to achieve the same absorbent capacity and the overall product cost can be substantially reduced. Uncreped through-air dried webs are particularly well suited to absorbing liquids in that the web not only quickly absorbs liquids but can absorb large quantities of liquids. The uncreped through-air dried web may have a basis weight of from about 10 gsm to about 120 gsm, such as from about 30 gsm to about 90 gsm.

Wet resiliency may be incorporated into the web by bonding the web to the film, by mechanical entanglement, or through the use of wet strength resins. For example, permanent wet strength agents comprising cationic oligomeric or polymeric resins may be used in the present invention. Polyamide-polyamine-epichlorohydrin type resins such as KYMENE 557H sold by Hercules, Inc. located at Wilmington, Delaware are the most widely used permanent wet-strength agents and are suitable for use in the present invention. Such materials have been described in the following U.S. Patent Nos.: 3,700,623. issued on October 24, 1972 to Keim; 3,772,076, issued on November 13,1973 to Keim; 3,855,158, issued on December 17, 1974 to Petrovich et al.; 3,899,388, issued on August 12, 1975 to Petrovich et al.; 4,129,528, issued on December 12, 1978 to Petrovich et al.; 4,147,586, issued on April 3. 1979 to Petrovich et al.; and, 4,222,921, issued on September 16, 1980 to van Eenam. Other cationic resins include polyethylenimine resins and aminoplast resins obtained by reaction of formaldehyde with melamine or urea.

The tissue web **14** may be laminated to the film **12** using any suitable method or technique. The laminate may be bonded across the entire plane of the product or may be bonded at only selected regions. The particular adhesive or method of bonding the individual layers together is generally not critical to the invention. Specific bonding techniques may include, for instance, flexographically printing an adhesive or a water based adhesive emulsion in between the layers, spraying an adhesive between the layers (hot melt or liquid at room temperature adhesives), crimping the layers together, or through thermal bonding such as heat embossing where the film is softened or melted in selected regions and pressed lightly into the absorbent layer and cooled. As the film solidifies it becomes bonded to the absorbent layer. Finally, cast or extrusion laminating of 4 mil thick or greater polyethylene, polypropylene, NYLON or other polymeric film directly onto the absorbent web, such as a Hydroentangled web, is a good way to achieve lamination especially when manufacturing a food prep mat to achieve absorbent and cut resistant features. The cut resistance of the food preparation mat can be improved by adding white or colored pigment to the film. Not only is the cut resistance improved by adding white pigment to the film it is further improved by adding color pigment. The white and colored film improves opacity improving the consumer perception that the mat is durable and cut resistant. The colored film helps the consumer to differentiate which side to cut food on to absorb juices with the absorbent top layer and keep the mat in place during cutting with the leak proof non-slip bottom mat.

While products comprising absorbent layers having high wet resiliency and high amounts of topography may be desirable in many applications, there are other times where it may be advantageous to have a product comprising a smooth sheet with a more clothlike feel. For example, in one embodiment the sheet comprises a highly debonded cellulosic sheet and a latex binder. The sheet may be creped or uncreped. Such sheets generally have a smooth surface texture, high wet strength, high durability, low stiffness and a very clothlike feel and texture. While such sheets tends to have a lower specific absorbent capacity than the through air dried tissue sheets previously mentioned, the improved texture and feel may make them more suitable for such applications as disposable placemats.

For example in one embodiment such cellulosic sheets can be prepared by 1) forming a wet laid tissue sheet preferably debonded, 2) applying to one side of the web a latex comprising a binder material having a glass transition temperature of less than about 40°C, 3) drying and creping said sheet such that the latex side is against the dryer, 4) applying to the second side of said sheet a latex binder material having a glass transition temperature of less than about 40°c, 5) drying and creping said sheet such that the second side of said sheet is in contact with the dryer and 6) optionally curing said sheet to affect crosslinking of the binder. Examples of such tissue products and methods to make such products can be found in U.S. Patent No. 3,879,257 by Gentile, et. al entitled "Absorbent unitary laminate-like fibrous webs and method for producing them" assigned to Scott Paper Company and issued April 22, 1975. Such materials are at times referred to as Double Re-Creped or DRC sheets. A variety of binders are known in the art and may be used. Particular suitable are styrene butadiene, polyvinylchloride and ethylene vinyl acetate binders such as EN-1165 and A-124 available from Air Products Corporation and Elite® PE Binder available from National Starch, Inc.

Various other processes are suitable for making such clothlike cellulosic structures. Acceptable products and process are described in commonly assigned U.S. Patent Application Nos. 10/192,781, filed July 10, 2002; 10/447,321, filed May 28, 2003; 10/326,915, filed December 20. 2002; 10/382,222, filed March 5, 2003; 101319,415, filed December 13, 2002; and 10/749,475, filed December 31. 2003. These so called print creped and dual re-creped webs clothlike feel can be characterized by the sheet's high tensile energy absorption (TEA) and low geometric mean tensile modulus (stiffness). The geometric mean tensile strength of the print creped web without the fluid impervious layer, defined as the square root of the product of the machine direction tensile strength and the cross direction tensile strength is preferably about 900 g / 3" (7.62 cm) or greater such as from about 900 g/3" (7.62 cm) to about 5000 g/3" in one embodiment to from about 1000 g/3" to about 3000 g/3" in another embodiment. The geometric mean modulus of the print creped web without the fluid impervious layer, defined as the square root of the product of the machine direction tensile modulus and the cross direction tensile modulus is preferably less than about 11 kg such as less than about 9 kg in one embodiment to about less than 7 kg in another embodiment. On the other hand the geometric mean tensile energy absorption defined as the square root of the product of the machine direction and cross direction tensile energy absorption is preferably greater than 15 g-cm/cm$^2$ such as greater than about 17 g-cm/cm$^2$, such as from about 17 g-cm/cm$^2$ to about 40 g-cm/cm$^2$.

In an alternative embodiment, instead of using a tissue web, the liquid absorbent layer **14** may comprise a hydroentangled web. Hydroentangled webs generally comprise a meltspun web that has been hydraulically entangled with pulp fibers, such as softwood or hardwood fibers. For example, water jets may be used to hydroentangle pulp fibers with the meltspun web on at least one side of the web. Hydroentangled webs are commercially available from the Kimberly-Clark Corporation under the tradename HYDROKNIT® Nonwoven Fabric.

In one embodiment, the hydroentangled web **14** may contain from about 60% to about 95% by weight pulp fibers, such as from about 70% to about 90% by weight. The overall basis weight of the web may be from about 30 to about 175 gsm, such as from about 50 to about 125 gsm. In one particular embodiment, for instance, the web may have a basis weight of from about 70 gsm to about 90 gsm.

In another embodiment, the hydroentangled web has 1-30 mm long polymeric fibers added to the pulp portion of the sheet to improve cut resistance.

When laminated to the film **12**, the pulp side of the hydroentangled web may face away from the film or be placed adjacent to the film. In general, better liquid absorbency characteristics are observed if the pulp side of the hydroentangled web forms the top layer of the laminate.

Of particular advantage, hydroentangled webs are capable of thermally bonding with various films. The webs also provide some degree of cut resistance, especially when combined with cut resistant polymeric films 4 mils (0.01 cm) thick or greater. This will allow a cut resistance of between 12 and 27 kgf/cm. Also of advantage, hydroentangled webs may be formed having a relatively large pore size which allows the webs to quickly absorb large amounts of liquids before liquid can pool on the surface or leak over the edge of the mat **10.** For instance, the hydroentangled web may have an equivalent hydraulic diameter of greater than about 900 microns, such as greater than about 1,000 microns.

The hydroentangled web may also have an equivalent circular diameter of greater than about 1,000 microns, such as greater than about 1100 microns.

In still another embodiment of the present invention, the liquid absorbent layer **14** may comprise an airlaid web. The airlaid web may contain cellulosic fibers, such as fluff pulp, rayon fibers, cotton fibers, and mixtures thereof. In one particular embodiment, for instance, the airlaid web **14** may comprise softwood fluff pulp and from about 5% to about 20% by weight of an adhesive material or binder. The binder may be, for instance, ethylene vinyl acetate. The binder is present to give the web some integrity, especially in the Z-direction.

The basis weight of the airlaid web **14** can vary depending upon the particular application and the amount of liquid that may need to be absorbed during use. The basis weight of the airlaid web **14,** for instance, may vary from about 35 gsm to about 85 gsm. For example, in one embodiment, the airlaid web may have a basis weight of from about 45 gsm to about 75 gsm.

Similar to the other absorbent layers described above, the airlaid web **14** may be laminated to any suitable film. In one particular embodiment, for instance, the film may comprise a polyolefin film, such as a polypropylene film. The film, for instance, may have a thickness of from about 0.5 mils to about 5 mils, such as from about 0.5 mils to about 1 mil. The film may be laminated to the airlaid web using any suitable adhesive, such as an ethylene vinyl acetate adhesive. In one particular embodiment, the total caliper of the absorbent mat **10** may range from about 0.5 mm to about 2 mm, such as from about 0.5 mm to about 1 mm.

Referring to **Fig. 3,** an alternative liquid absorbent mat not in accordance with the present invention is shown. In this arrangement, the liquid absorbent mat **20** includes a liquid absorbent layer **24** similar to the liquid absorbent layers described above. As shown, the liquid absorbent layer **24** is laminated to a liquid impervious layer **22.** In this embodiment, as opposed to the embodiment shown in **Figs. 1** and **2,** the liquid impervious layer **22** comprises a nonwoven. The liquid impervious nonwoven layer **22** may be made from various suitable materials. It should be understood that the nonwoven web **22** does not have to be completely liquid impermeable but simply must be capable of preventing liquids from rapidly striking through the product. For example, as described above, the nonwoven web **22** may have a HST value of greater than about **1** minute, such as greater than about 2 minutes. In one particular embodiment, for instance, the nonwoven web **22** may have a HST value of greater than about **4** minutes.

The substantially water impervious nonwoven layer **22** may comprise a meltspun web, such as a spunbond web, meltblown web, or laminate thereof that has the necessary degree of water impermeability. For instance, the meltspun web may be hot calendered in order to improve the liquid impervious characteristics of the web.

The liquid impervious nonwoven layer **22** may comprise a hydroentangled web. Again, the hydroentangled web may be hot calendered in order to increase the ability of the web to stop fluid flow.

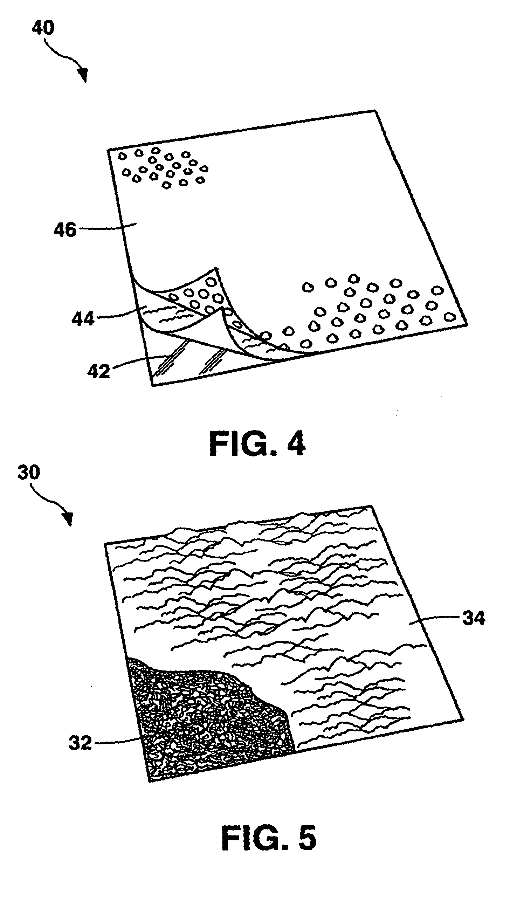

Referring to **Fig. 5,** another liquid absorbent mat not in accordance with the present invention is shown. Similar to the arrangement shown in **Fig. 3,** the mat **30** as shown in **Fig. 5** includes a nonwoven liquid absorbent layer **34** and a nonwoven liquid impervious layer **32.** In this arrangement, however, the liquid absorbent layer **34** is shown to have a highly textured topography in relation to the nonwoven **32.**

In this arrangement, for instance, the liquid impervious layer **32** has a smooth topography while the absorbent top layer **34** has a textured surface or other visual cue for the consumer to determine which side of the sheet to use. In one particular embodiment, for instance, the liquid absorbent layer **34** may comprise a highly textured uncreped through-air dried tissue web, while the liquid impervious layer **32** may comprise a meltspun web.

A liquid absorbent mat **40** generally made in accordance with the present invention is shown in **Fig. 4.** As illustrated, the liquid absorbent mat **40,** includes a liquid impervious layer **42** which is represented as a film but may also be a nonwoven. A liquid absorbent layer **44** is positioned on top of the liquid impervious layer **42.** The liquid absorbent mat **40** further includes a top layer **46** comprising a liquid impervious sheet that has been apertured to allow liquid to flow into the absorbent layer **44.** The apertured layer **46** allows liquids to be absorbed by the product while reducing the tendency of the liquids to migrate back to the top surface of the product.

The liquid impervious apertured top layer **46** is preferably of a very low thickness so as to not impart any undesirable stiffness into the product. The top layer **46** will have a thickness typically less than 5 mils (0.127 cm), such as less than about 4 mils (0.102 cm) in one embodiment to less than about 2 mils (0.051 cm) in another specific embodiment.

The apertures contained in the top sheet **46** may be of any size but in general may have an opening area greater than about 0.5 mm. For instance, the opening area may range from about 0.5 mm to about 2 mm. The ratio of apertured area to non-apertured area may also vary but may range from about 0.1 to about 0.9, such as from about 0.2 to about 0.8. In one particular embodiment, for instance, the ratio of apertured area to non-apertured area may be from about 0.25 to about 0.6.

The number of apertures present on the top sheet **46** can be at a frequency of from about 3 apertures per linear inch (2.54 cm) to about 800 apertures per linear inch, such as from about 5 apertures per linear inch to about 600 apertures per linear inch, and still more specifically from about 10 apertures per linear inch to about 400 apertures per linear inch when measured in any direction of the sheet.

EP 1 805 011 B1

The apertures formed into the top sheet **46** may be made by a variety of methods. Perforated embossing of the layer can be used such that during embossing, penetration of the layers is achieved thereby creating a physical puncture through the top sheet. The perforated embossing can be done either on the individual layers or plies or on the entire product. Other methods to form the apertures include pin aperturing, die punching, die stamping, water knives that cut out the desired holes in the web, vacuum assisted aperturing whereby a high vacuum is applied to one side of the web as the web is supported by a porous surface, laser cutters, needle punching, and the like.

Fibers of the liquid absorbent layer **44** fill or partially fill the apertures of the top sheet **46** further enhancing the ability of liquids to be transported into the absorbent layer **44**. Needling techniques similar to the carding process can be used to manipulate fibers into the apertures. Alternatively, needles having hooks or materials having small hooks, such as the hook material of hook and loop fasteners, can be used to pull fibers into the apertures upon withdrawal while also creating the apertures as the hooks or needles are pushed into the tissue product.

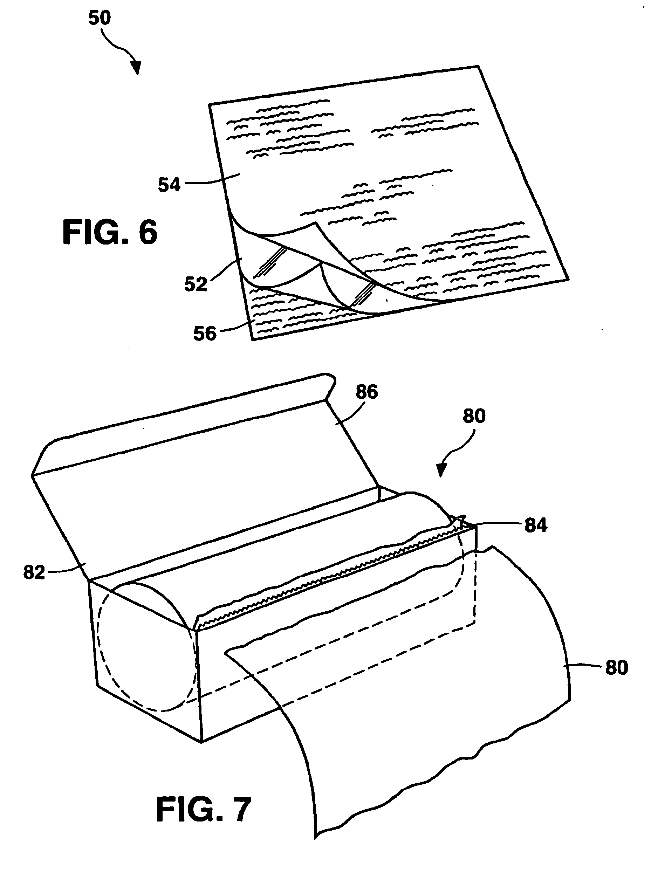

Referring **to Fig. 6,** a liquid absorbent mat not in accordance with the present invention is shown. In this arrangement, the liquid absorbent mat **50** includes a liquid impervious layer **52** positioned in between a first liquid absorbent layer **54** and a second liquid absorbent layer **56.** Liquid absorbent mat **50** may be particularly advantageous since either side of the mat may be used with equal efficaciousness. The liquid absorbent layer **54** may be the same or different from the liquid absorbent layer **56**. In general, any suitable liquid absorbent layer as described above or any suitable liquid impervious layer as described above may be used to construct the mat **50.**

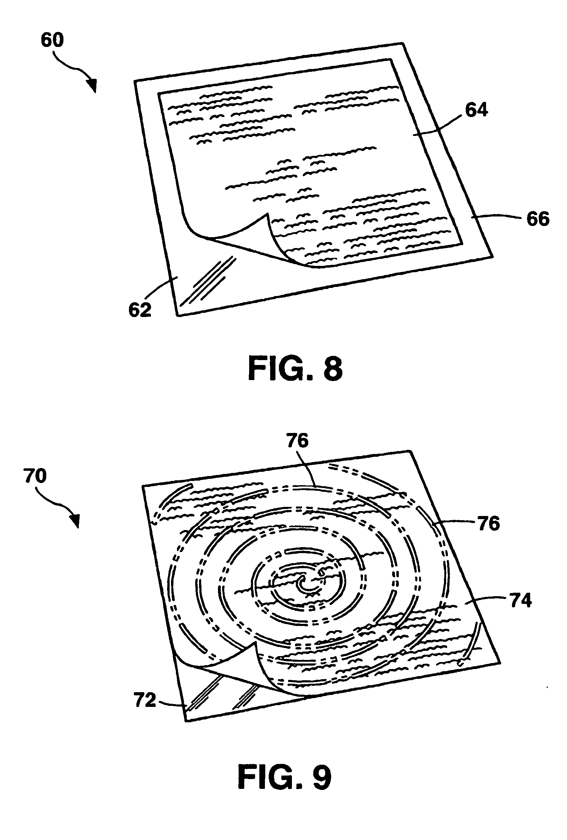

Referring to **Fig. 8,** another absorbent mat is illustrated. The mat **60** includes a liquid impervious layer **62** and a liquid absorbent layer **64.** As shown, the liquid impervious layer **62** is larger in size than the liquid absorbent layer **64.** In this manner, a liquid impervious rim **66** is formed ' around the mat **60.** The liquid impervious rim **66** may be present in order to prevent liquids from leaving the edges of the mat **60.** The rim **66** may be made from multiple layers of material and thus may be elevated to further prevent liquids from running off the product.

The liquid absorbent mat **60** as shown in. **Fig. 8** may further be combined with an apertured top sheet as shown in **Fig. 4.** The apertured top sheet may provide for improved cut resistance while still allowing liquids to be absorbed by the product.

It should be understood that the liquid impermeable rim **66** as shown in **Fig. 8** may be combined with any of the other embodiments discussed or described above.

In addition to a rim **66** as shown in **Fig. 8,** in other embodiments, various other liquid barriers may be incorporated into the product. For example, in an alternative embodiment, superabsorbent particles may be incorporated into the product around at least a portion of the perimeter of the product. The superabsorbent particles are capable of absorbing greater amounts of liquid and thus preventing runoff. The superabsorbent particles may be spread around the entire perimeter of the product, over a portion of the perimeter of the product, or may be spread over the entire surface area of the product. When placed around the perimeter of the product, the superabsorbent particles not only absorb liquids, but may also swell to provide a ridge or an increased height to further prevent runoff.

In still another embodiment of the present invention, a bead of adhesive material may be placed around the product to prevent liquid runoff. The adhesive material, for instance, may be a hotmelt adhesive. The hotmelt adhesive may be applied around the perimeter of the product or applied in other areas.

For example, referring to **Fig. 9,** another liquid absorbent mat is shown. In this embodiment, the mat **70,** which includes a liquid impervious layer **72** and a liquid absorbent layer **74,** further includes concentric rings, a spiral, or labyrinth-like fluid barriers **76** incorporated into the product. The fluid barrier **76** may be made from an adhesive material, such as a hotmelt adhesive. Depending upon how the fluid barriers **76** are arranged, the barriers may be used either to contain liquids within the product or to channel the liquids to a particular location.

Any of the fluid absorbent mats shown in the drawings may further include various additives to improve the properties of the product. For example, in one embodiment, an antimicrobial agent may be incorporated into the product. For instance, silver ions or zeolites may be embedded into the absorbent layer and/or the liquid impervious layer. Other various antimicrobial agents may also be used. Such antimicrobial agents include MICROBAN particles, chitosan or other polymers or non-dissolving agents know to have antimicrobial or bacteriostatic activity.

In still another embodiment, an odor absorbing agent may be incorporated into the liquid absorbent mat **60.** The odor absorbent may be, for instance, carbon particles.

In addition to various additives, the liquid absorbent mat can also be subjected to various post treatment processes in order to improve the properties of the mat or to improve the aesthetic qualities of the mat. For instance, the mats may be printed with various designs and may be embossed to either improve fluid intake or to enhance the appearance of the product.

As described above, in one embodiment, the liquid absorbent mat may be contained in a spirally wound form. In one embodiment as shown in **Fig. 7,** the spirally wound fluid absorbent mat **80** may be contained in a container **82.** The container **82** may have a lid **86** and a cutting edge **84.** In this manner, the desired length of the liquid absorbent mat may be pulled from the spirally wound product and then cut using the cutting edge **84.**

The present invention may be better understood with reference to the following examples.

10

## EXAMPLES

Various liquid absorbent placemats were constructed according to the present invention and tested for various physical properties including pore size and fiber diameter, absorbent rate, and cut resistance. Specifically, in Examples 1 through 3, the mats were produced from a hydroentangled web laminated to a polyolefin film.

## Example 1

In the following example, the hydroentangled webs contained in the mats were tested for pore size and fiber diameter, specifically testing for equivalent hydraulic diameter (EHD) and the equivalent circular diameter (ECD). A larger pore size can quickly absorb large amounts of liquid before the liquid can pool on the surface or leak over the edge of the mat. In this example the following samples were produced and tested:

Sample 1 was constructed out of a 5 mil (0.0127 cm) HDS polyethylene film extrusion laminated to a 82 gsm hydroentangled web with the spunbond side out. The spunbond portion of the hydroentangled web had a basis weight of .35 osy (11.87 gm$^{-2}$).

Sample 2 was constructed out of a 5 mil (0.0127 cm) HDS polyethylene film extrusion laminated to a 82 gsm hydroentangled web with the pulp side out. The spunbond portion of the hydroentangled web had a basis weight of .35 osy (11.87 gm$^{-2}$). The following tests were performed on the samples:

I. **Sample Prep -** Sample sidedness and directionality were noted and six small squares ($\simeq$1x1 cm$^2$) were randomly cut from each sample. The square were mounted on an SEM stub and gold coated using a Denton Desk II sputter coater. Thickness was approximately 400-500 angstroms.

II. **Image Collection -** A Jeol 840 secondary electron microscope (SEM) was used to acquire backscatter-electron/high-contrast (BSE/HICON) images. The following imaging conditions and setting were used:

**a.** Working Distance (WD) = 24
**b.** Accelerating = 10.0 kV
**c.** Probe Current =1x10$^{-8}$ amps
**d.** Aperture setting = 3
**e.** Use the 1 % rule (i.e., smallest fibers should be at least 1 mm thick on the SEM screen) to determine the magnification.
**f.** Once the mag is determined, it must be kept constant for all images of a single sample
**g.** BE Imaging settings (may vary with different SEMS and condition of instrument)

**i.** Suppress - fully counter-clockwise
**ii.** Gain (course) = 3
**iii.** Gain (fine) approx. 11:30
**iv.** Brightness approx. 9:00
**v.** Topo approx. 12:00

### *Acquiring BE Images using Polaroid film*

**1.** Use type-51 (T-51) Polaroid film to acquire the BE image
**2.** Make sure the camera is set for T-51 film

**a.** Aperture = f/22
**b.** B = 4.0
**c.** C = 4.3

**3.** Repeat the entire image acquisition process (step 12-15 under *Procedural Steps)* so that two Polaroid BE images are acquired for each piece of sample (i.e. total of 12 images for the entire sample).

III. **Analysis of Images** (Q500 IA System or Matlab macro.)

Data were acquired from the BSE/HICON photos by using the Quantimet 600 image Analysis System and custom-written routine 'MBPAS1.' The Quantimet 600 is manufactured by Leica, Inc. (Cambridge, UK). Other imaging conditions and resources used were as follows:

- Quantimet 600 image Software - QWIN version 1.06
- Camera - SONY Model DXC-930P
- Camera mount - Polaroid MP-4 Land Camera (79.3 cm)
- Lens - 35-mm adjustable Nikon (f-stop=4)
- Lighting - Four flood lamps (150 Watt - GE Reflector)
- Auto-stage -12"x12" (30.5 cm) Designed Components Inc. (Franklin, MS)
- Programming - Quantimet User Interactive Programming System (QUIPS) The custom routine is shown below.

Six regions were sampled for each code, and two images were acquired per region (n=6). Two fields-of-view (FOV) were analyzed for each of the two images acquired per region.

This resulted in a total of 12 BSE/HICON photos for each code and 24 FOV total.

**<u>Image Analysis Routine</u>**

```
NAME: MBPAS1
PURPOSE: SCANS N# OF PHOTOMONTAGES TO GIVE POROSITY
CHARACTERISTICS
CONDITIONS: 35 MM ADJ. NIKON LENS; F/4; 4 FLOODS; SONY
3CCD CAMERA; POLE=79.3
AUTHOR: DAVE BIGGS
DATE: AUGUST 10, 2004

COMMONCALVALUE = 93.1
TOTANISOT = 0
TOTFIELDS = 0
PERCAREA = 0
TOTPERCAREA = 0

Enter Results Header
Calibrate (CALVALUE CALUNITS$ per pixel)
PauseText ("Enter SEM magnification used.")
Input (MAG)
CALVALUE = COMMONCALVALUE/MAG

Image Setup [PAUSE] (Camera 5, White 82.32, Black 100.00, Lamp
24.69)
Measure frame (x 32, y 32, Width 676, Height 515)

For ( REPLICATE = 1 to 2, step 1)

Clear Field Histogram #1
Clear Feature Histogram #1
Clear Feature Histogram #2
Clear Feature Histogram #3
Clear Feature Histogram #4

Stage (Define Origin )
Stage (Scan Pattern, 1 x 4 fields, size 109000.429688 x 69999.921875)

For ( FIELD = 1 to 4, step 1)
Image Setup (Camera 5, White 83.91, Black 100.00, Lamp 24.69)
Acquire ( into Image0)
Grey Amend (Close from Image0 to Image1, operator Disc, cycles 3)
Detect ( blacker than 103, from Image1 into Binary0 delineated )
Binary Amend (Open from Binary0 to Binary1, cycles 1, operator Disc,
edge erode on)

MFLDIMAGE = 0
```

```
 Measure field (plane MFLDIMAGE, into FLDRESULTS(4))
Selected parameters: Area, Count, Anisotropy, Area%
ANISOT = FLDRESULTS(3)
TOTANISOT = TOTANISOT+ANISOT
TOTFIELDS = TOTFIELDS+1
PERCAREA = FLDRESULTS(4)
TOTPERCAREA = TOTPERCAREA+PERCAREA


   Field Histogram #1 (Y Param Number, X Param Area%, from 0. to
   75., linear, 15 bins)

   Measure feature (plane Binary1, 8 ferets, minimum area: 10, grey
   image: Image0)
   Selected parameters: Area, X FCP, Y FCP, Length, Breadth,
   Perimeter,
   UserDef1, UserDef2, UserDef3, UserDef4, UserDef5
    Feature Expression (UserDef1 (all features), title ECD1 =
    (4*PAREA(FTR)/3.1416)**0.5)
    Feature Expression (UserDef2 (all features ), title EHD1 =
    4*PAREA(FTR)IPPERIMETER(FTR))
    Feature Expression (UserDef3 (all features), title FTRCALCB =
    (8/(3*3.1416)*(PAREA(FTR)**2)/PLENGTH(FTR))1100000)
    Feature Expression (UserDef4 (all features), title ECD1CONV =
    ((4*PAREA(FTR)/3.1416)**0.5)/CALVALUE)
    Feature Expression (UserDef5 (all features ), title EHD1CONV =
    (4*PAREA(FTR)/PPERIMETER(FTR))/CALVALUE)
    Display Feature Results (x 64, y 716, w 832, h 281)
    Feature Accept :
    UserDef5 from 4. to 1000.
    Feature Histogram #1 (Y Param Number, X Param UserDef2, from
    10. to 10000., logarithmic, 15 bins )
    Feature Histogram #2 (Y Param Area, X Param UserDef2, from 10.
    to 10000., logarithmic, 15 bins)


Clear Accepts
Feature Accept :
UserDef4 from 4. to 1000.
Feature Histogram #3 (Y Param Number, X Param UserDef1, from
10. to 10000., logarithmic, 15 bins)
Feature Histogram #4 (Y Param UserDef3, X Param UserDef2, from
10. to 10000., logarithmic, 15 bins)
Clear Accepts

Stage (Step, Wait until stopped + 10 x 55 msecs)


Next (FIELD)


   PRINT:
   Set Print Position (8 mm, 24 mm)
   Print Results Header
   Print ("FIELD COUNT VS % AREA HISTOGRAM", tab follows)
   Print Line
   Print Field Histogram Results (#1, horizontal, differential, bins +
   graph (Y axis linear), statistics)
    Print ("AVERAGE % AREA =", no tab follows)
    Print (TOTPERCAREA/TOTFIELDS, 2 digits after'.', tab follows)
    Print Line
    Print ("AVERAGE PORE ANISOTROPY (TAN THETA) =", no tab
   follows)
    Print (TOTANISOT/TOTFIELDS, 3 digits after'.', no tab follows)
    Set Image Position (left 87 mm, top 127 mm, right 191 mm, bottom
    197 mm, Aspect = None,
```

```
Caption:Bottom Centre,"A Representative Image @ 50X Magnification
 Grey Util (Print Image0)
 Print Page
 Set Print Position (8 mm, 8 mm)
 Print Results Header
 Print ("PORE COUNT VS. EHD (4*A/P)", no tab follows)
 Print Line
 Print Feature Histogram Results (#1, horizontal, differential, bins +
graph (Y axis linear), statistics)
 Print ("CUMMULATIVE PORE %AREA VS EHD (4*A/P)", no tab
follows)
 Print Line
 Print Feature Histogram Results (#2, horizontal, differential, bins +
graph (Y axis linear), statistics )
 Print Page
 Set Print Position (8 mm, 8 mm)
 Print Results Header
 Print ("PORE COUNT VS. ECD [SQR(4*A/PI)}", no tab follows)
 Print Line
 Print Feature Histogram Results (#3, horizontal, differential, bins +
graph (Y axis linear), statistics)
 Print ("EHD (4*AREA/PERIMETER) vs. ELLIPSOIDAL VOLUME
[(8/3PI)*AREA**2/LLENGTH}", no tab follows)
 Print Line
 Print Feature Histogram Results (#4, horizontal, differential, bins +
graph (Y axis linear), statistics)
 Print Page

 If (REPLICATE=3)
 Goto STOP
 Endif

 Stage (Move to 109999.804688, 0.000000, Wait until stopped + 10 x
 55 msecs)

 Next (REPLICATE)

 STOP:
 CALVALUE = CALVALUE*MAG

END
```

The following results were obtained:

| Sample | EHD (um) | Area-wt. EHD | ECD (um) |
|--------|----------|--------------|----------|
|        |          |              |          |
| 1      | 1043.7   | 1327.0       | 1111.5   |
| 2      | 1062.4   | 1406.6       | 1158.0   |
|        |          |              |          |

## Example 2

In the following example various mats were tested for cut resistance in both the Machine Direction (MD) and the Cross Direction (CD). In this example the following samples were produced and tested:

Sample 3 was constructed out of a 5.5 mil (0.014 cm) polypropylene film cast laminated to a 125 gsm hydroentangled web with the pulp side out. The spunbond portion of the hydroentangled web had a basis weight of .75 osy (25.43 gm$^{-2}$).

Sample 4 was constructed out of a 5.5 mil (0.014 cm) polypropylene film cast laminated to a 125 gsm hydroentangled web with the spunbond side out. The spunbond portion of the hydroentangled web had a basis weight of .75 osy (25.43 gm$^{-2}$).

Sample 5 was constructed out of a 5 mil (0.013 cm) polypropylene film cast laminated to a 82 gsm hydroentangled web with the pulp side out. The spunbond portion of the hydroentangled web had a basis weight of .35 osy (11.87 gm$^{-2}$).

Sample 6 was constructed out of a 6 mil (0.015 cm) polypropylene film cast laminated to a 82 gsm hydroentangled web with the pulp side out. The spunbond portion of the hydroentangled web had a basis weight of .35 osy (11.87 gm$^{-2}$).

The following cut resistance tests were performed on the samples. The test is described in U.S. Patent No. 6,383,615.

The test apparatus applies a known force in the z (vertical) direction on a knife blade to measure the cut resistance of a sample. A knife blade was placed in the knife holder. The knife blades used for all testing were Poultry Blades Code# 88-0337 by Personna. The test sample was mounted to a sample platform. The knife blade was then brought into contact with the sample. A known load was applied to the knife blade in the vertical direction. The sample platform was then moved at a rate of 8 inches (20.32 cm) per second for 4 inches (10.16 cm) under the weight of the knife blade creating a slice. Consecutive slices of increasing load were made until the knife blade cut through the sample. The knife force required to penetrate completely through the sample was recorded. Slice resistance was calculated as the slice force/sample thickness. The test was then replicated on 4-5 separate samples and average values were reported. The following results were obtained:

| Sample | MD (kgf/cm) | CD (kgf/cm) |
|---|---|---|
| 3 | 12.75 | 14.71 |
| 4 | 12.59 | 16.03 |
| 5 | 10.19 | 11.37 |
| 6 | 13.77 | 14.43 |

### Example 3

In the following example the hydroentangled webs contained in the mats were tested for their absorbent rate. In this example the following samples were produced and tested:

Sample 7 was constructed out of a 5.5 mil (0.014 cm) polypropylene film cast laminated to a 82 gsm hydroentangled web with the pulp side out. The spunbond portion of the hydroentangled web had a basis weight of .35 osy (11.87 gm$^{-2}$).

Sample 8 was constructed out of a 5.5 mil (0.014 cm) polypropylene film cast laminated to a 82 gsm hydroentangled web with the spunbond side out. The spunbond portion of the hydroentangled web had a basis weight of 35 osy (11.87 gm$^{-2}$).

Sample 9 was constructed out of a 5.5 mil (0.014 cm) polypropylene film cast laminated to a 82 gsm hydroentangled web with the pulp side out. The spunbond portion of the hydroentangled web had a basis weight of .75 osy (25.43 gm$^{-2}$)

Sample 10 was constructed out of a 6 mil (0.015 cm) polypropylene film cast laminated to a 82 gsm hydroentangled web with the spunbond side out. The spunbond portion of the hydroentangled web had a basis weight of .75 osy (25.43 gm$^{-2}$).

The following test was conducted on the samples:

1. Cut the specimen to 6 inches by 6 inches (15.24 cm).
2. Use a ruler to mark the center of the specimen.
3. Use paper towels to ensure that the FIFE board and cylinder are clean and completely dry.
4. Verify the amount of dyed solution being dispensed from the Nalgene® variable-volume dispenser (Kimberly Clark item number 1464745; part number 3702-0025).

    a. Set the variable-volume dispenser to 5 milliliters.
    b. Fill the variable-volume dispenser cup by squeezing the bottle and forcing the dye solution up into the variable-volume dispenser cup.

c. Pour the solution from the variable-volume dispenser cup into a graduated cylinder. Ensure that the volume is 5 $\pm$ 0.5 milliliters.

d. If necessary, adjust the height of the dispenser cup until the volume falls within the acceptable range.

5. Place and center the specimen, absorbent side up, on the bottom section of the FIFE board. Smooth the specimen by pulling gently on the edges of the product to avoid creases or wrinkles.

6. Place the top section of the FIFE board over the specimen. Ensure that the mark at the center of the specimen is aligned with the center of the cylinder opening.

7. Press lightly on the top section of the FIFE board to impress the cylinder ridge into the specimen.

8. Quickly pour 5 $\pm$ 0.5 milliliters of dyed solution from the variable-volume dispenser cup into the cylinder and simultaneously start the timer. Try to pour directly onto the specimen rather than the walls of the cylinder.

9. Observe the testing fluid intake through the cylindrical opening in the top section of the FIFE board. Stop the timer immediately when the testing fluid is not visible on the specimen surface within the cylindrical opening area. Record this time to the 0.1 second as the Absorbent Rate. The following results were obtained:

| **Sample** | **Avg. rate (g/s-sgcm) 70° F** |
|---|---|
| 7 | 0.0007 |
| 8 | 0.0004 |
| 9 | 0.0007 |
| 10 | 0.0003 |

## Example 4

Measurement of absorbent capacity:

Procedure - Single absorbent side products

The following procedure is used when a sample has an absorbent side and a non-absorbent side. The Dual Absorbent Side procedure should be used for products where both outer sides are absorbent layers with the barrier being in the center of the two layers or plies. All samples should be conditioned at standard TAPPI conditions for a minimum of 4 hours prior to testing.

A sample specimen 4 $\pm$ 0.04 inches (10.16 $\pm$ 0.10 cm) 4 $\pm$ 0.04 inches is cut using a swing beam cutting machine (SB-20, USM Corporation or equivalent) or a manual paper cutter (McMaster-Carr Supply Co. part # 3823A44 or equivalent) and weighed to the nearest 0.01 gram on a balance. The "dry weight" is recorded. A weighing dish is tared on the balance. The sample specimen is attached on one end to a pinch type clamp such as shown below with the specimen attached to the clip or clips on the clamp. A container is filled with a sufficient volume of water to insure that the test specimen can be fully submerged. The water temperature should be maintained at 23 +/- 3°C. The specimen and clamp are then placed into the water absorbent side up using a tongs. A timer is immediately started. The specimen is allowed to soak in the water for 30 +/- 5 seconds. The specimen is removed from the water by grasping the clamp width the tongs. The sample is then suspended in air by hanging from the clamp for 30 +/- 5 seconds. The clamp is shaken one time by bringing the sample plane to horizontal and rotating the sample plane to vertical in less than 1 second. The specimen is then released from the clamp, absorbent side up, onto a blotter paper so as to remove any water from the non-absorbent side. Care should be taken to avoid contacting the absorbent side of the sample with the blotter paper. The non-absorbent side should be completely contacting the blotter paper and non of the absorbent side contacting the blotter paper. The specimen is allowed to sit on the blotting paper for 1 - 5 seconds. The specimen is then removed from the blotter and placed on a tared weighing dish and the weight of the wet sample "Wet Weight" recorded to the nearest 0.01 gram. The absorbent capacity in g/cm2, specific absorbent capacity (g water / g sample) or fiber absorbent capacity (g water / g cellulose fiber) can then be determined using the following equations:

$$\text{Absorbent Capacity (g/cm}^2) = \underline{\text{Wet Weight (g)} - \text{Dry Weight (g)}}$$
$$\text{Sample area}$$

Where: sample area = 103.23 cm$^2$

$$\text{Specific Absorbent Capacity (g/cm}^2) = \underline{\text{Wet Weight (g)} - \text{Dry Weight (g)}}$$
$$\text{Dry Weight (g)}$$

$$\text{Fiber Specific Absorbent Capacity (g/g)} = \underline{\text{Wet Weight (g)} - \text{Dry Weight (g)}}$$
$$\text{Fiber weight}$$

Absorbent Capacity:

Procedure - Dual Absorbent Side

The following procedure is used to measure the absorbent capacity of products having two absorbent sides as well as the absorbent capacity of the fluid absorbent layer without the fluid impermeable layer.

A sample specimen $4 \pm 0.04$ inches ($10.16 \pm 0.10$ cm) by $4 \pm 0.04$ inches is cut using a swing beam cutting machine (SB-20, USM Corporation or equivalent) or a manual paper cutter (McMaster-Carr Supply Co. part # 3823A44 or equivalent) and weighed to the nearest 0.01 gram on a balance. The "dry weight" is recorded. A weighing dish is tared on the balance. The sample specimen is attached on one end to a pinch type clamp such as shown below with the specimen attached to the clip or clips on the clamp. A container is filled with a sufficient volume of water to insure that the test specimen can be fully submerged. The water temperature should be maintained at 23 +/- 3°C. The specimen and clamp are then placed into the water absorbent side up using a tongs. A timer is immediately started. The specimen is allowed to soak in the water for 30 +/- 5 seconds. The specimen is removed from the water by grasping the clamp with the tongs. The sample is then suspended in air by hanging from the clamp for 30 +/- 5 seconds. The clamp is shaken one time by bringing the sample plane to horizontal and rotating the sample plane to vertical in less than 1 second. The specimen is then released from the clap and placed on a tared weighing dish and the weight of the wet sample "Wet Weight" recorded to the nearest 0.01 gram. The absorbent capacity, specific absorbent capacity and fiber absorbent capacity are calculated using the same equations as for the single absorbent sided sheets.

A single-ply uncreped through air dried tissue sheet having a basis weight of 39 g/m$^2$ and a specific absorbent capacity of 7.0 g/g was laminated to a 12 g / m$^2$ polypropylene film using an adhesive. The adhesive was applied in approximately ¾" (1.91 cm) wide lines along the MD direction of the sheet. The adhesive was applied along both outer edges and then along MD lines across the CD of the sheet spaced about 2" (5.08 cm) apart. The finished basis weight of the sheet was 51 g/m$^2$. The absorbent capacity of the sheet was found to be 0.036 g/cm$^2$, the specific absorbent capacity of the finished sheet was found to be 7.16 g/g and the specific fiber absorbent capacity found to be 9.41 g/g fiber.

## Example 5

A commercially available poly backed laminated tissue product having a basis weight of 100 g/m$^2$ comprising a 12 g/m$^2$ polypropylene film laminated to 3 plies of conventional wet pressed tissue having a basis weight of 88 g/m2 was found to have an absorbent capacity of 0.069 g/cm$^2$, a specific absorbent capacity of 7.14 g/g and a specific fiber absorbent capacity found to be 8.12 g/g fiber. The specific absorbent capacity of the tissue basesheet was found to be 6.71 g/g.

The benefits of using an uncreped through air dried sheet can be seen by the 16% greater specific fiber absorbent capacity compared to the sample in Examples 2 despite using a single ply instead of 3-plies of tissue. While both products show an increase in fiber absorbent capacity when applying the fluid impermeable layer the fiber absorbent capacity increases by 34% in the case of the more resilient structure in Example 2 versus 21% for the less resilient wet pressed tissue sheet of Example 1.

**Example 6:**

A single-ply uncreped through air dried tissue sheet having a basis weight of 39 g / m2 and a specific absorbent capacity of 7.0 g/g was laminated to both sides of a 12 g / m2 polypropylene, film using an adhesive. The adhesive was applied in approximately ¾" (1.91 cm) wides lines along the machine direction of the sheet. The adhesive was applied along both outer edges and then along MD lines across the cross direction of the sheet spaced about 2" (5.08 cm) apart. The finished basis weight of the sheet was 90 g/m2. The absorbent capacity of the sheet was found to be 0.073 g/cm2, the specific absorbent capacity of the finished sheet was found to be 8.15 g/g and the specific fiber absorbent capacity found to be 9.38 g/g fiber.

**Example 7:**

A single ply of airlaid sheet having a basis weight of 55 g/m$^2$ was laminated to a 0.75 mil (0.0019 cm) thick polypropylene film with a vinyl acetate adhesive using a Flexographic process with a patterned adhesive application with a 17% coverage area.

**Example 8:**

A single ply of sheet highly debonded creped, double creped or double re-creped latex or acrylate binder printed on highly debonded web having a basis weight of 55 g/m$^2$ was laminated to a 0.75 mil (0.0019 cm) thick polypropylene film with a vinyl acetate adhesive using a Flexographic process with a patterned adhesive application with a 17% coverage area.

**Example 9:**

A single ply of Hydroentangled web having a basis weight of 82 gsm was cast or extrusion laminate to a 5.5 mil (0.014 cm) thick polypropylene film with a high coefficient layer on the bottom of the film to impart a non-slip feature to the mat. The sample was tested for its coefficient of friction according to ASTM Test No. D1894-99. This mat has a machine direction (MD) coefficient of friction (COF) of 1.5 and a cross direction (CD) COF of 1.5. and a cut resistance of 22.1 kgf/cm.

These and other modifications and variations to the present invention may be practiced by those of ordinary skill in the art, without departing from the scope of the present invention, which is more particularly set forth in the appended claims. In addition, it should be understood that aspects of the various embodiments may be interchanged both in whole or in part. Furthermore, those of ordinary skill in the art will appreciate that the foregoing description is by way of example only, and is not intended to limit the invention so further described in such appended claims.

**Claims**

1.   A rolled absorbent product comprising a plurality of spirally wound interconnected fluid absorbent sheets (40), the sheets (40) including:

> a first fluid absorbent layer (44);
> a second fluid impervious layer (42); and
> a top layer (46) comprising a liquid impervious apertured sheet;
> **characterised in that**:
> fibres of the absorbent layer (44) fill or partially fill the apertures of the top sheet (46).

2.   A rolled absorbent product as defined in claim 1, wherein the sheets (40) have a sheet width of from 6" (15.24 cm) to 14" (35.56 cm) and a roll diameter of from 3" (7.62 cm) to 8" (20.32 cm).

3.   A rolled absorbent product as defined in claims 1 or 2, wherein the sheets (40) have a basis weight of less than 150 gsm.

4.   A rolled absorbent product as defined in any of claims 1 to 3, wherein the first fluid absorbent layer (44) has a liquid absorption capacity of at least 4 g/g.

**5.** A rolled absorbent product as defined in any preceding claim, wherein the sheets (40) have a caliper of less than 800 microns (31.5 mils).

**6.** A rolled absorbent product as defined in any preceding claim, wherein the first layer (44) of the sheets (40) has a HST value of less than 5 seconds and the second layer (42) of the sheets (40) has a HST value of greater than 1 minute, such as greater than 2 minutes.

**7.** A rolled absorbent product as defined in any preceding claim, wherein the fluid absorbent sheets (40) have a caliper of from about 40 microns to about 800 microns and have a basis weight of from 5 gsm to 90 gsm.

**8.** A rolled absorbent product as defined in any preceding claim, wherein each fluid absorbent sheet (40) comprises a laminate, the fluid absorbent layer (44) comprising a first ply of the laminate and the fluid impervious layer (42) comprising a second ply of the laminate.

**9.** A rolled absorbent product as defined in any preceding claim, wherein:

the fluid absorbent layer (44) is positioned in between the fluid impervious layer (42) d the apertured layer (46);
said apertured layer (46) has a thickness of 4 mils (0.01 cm) or less;
the apertured layer (46) contains apertures having an area of at least 0.5 mm$^2$; and
the apertured layer has a ratio of apertured area to non-apertured area of from about 0.1 to 0.9.

**10.** A rolled absorbent product as defined in any preceding claim, wherein the fluid absorbent sheets (40) are separated by a perforation line.

**11.** A rolled absorbent product as defined in any of the preceding claims, further comprising a container (82) that contains the spirally wound fluid absorbent sheets (40), the container (82) including a cutting edge (84) for severing the rolled absorbent product into the fluid absorbent sheets (40).

**12.** A rolled absorbent product as defined in any preceding claim, wherein the fluid impervious layer comprises a polymeric film having a thickness of from 0.05 mils (1.3 x 10$^{-4}$cm) to 4 mils (0.01 cm) and a basis weight of from 5 gsm to 30 gum.

**13.** A rolled absorbent product as defined in any preceding claim, wherein the fluid absorbent layer (44) comprises a tissue web of one or more plies and the fluid impervious layer comprises a film.

**14.** A rolled absorbent product as defined in claim 13, wherein the tissue web comprises a creped through-air dried web or an uncreped through air dried web.

**15.** A rolled absorbent product as defined in claim 13 or 14, wherein the fluid absorbent layer (44) has a specific fiber water absorbent capacity of 9 grams per gram fiber or greater.

**16.** A rolled absorbent product as defined in any of claims 1 to 11, wherein the fluid impervious layer (42) comprises a nonwoven web.

**17.** A rolled absorbent product as defined in any of claim 1 to 12 wherein the fluid absorbent layer (44) comprises a uncreped through-air dried tissue web, a print creped tissue web, an airlaid web, a hydroentangled web, or a coform web.

**18.** A rolled absorbent product as defined in any preceding claim, wherein the fluid absorbent sheets (40) include a perimeter and wherein the sheets (40) further comprise a fluid barrier (76) positioned around at least a portion of the perimeter of each sheet (40).

**19.** A rolled absorbent product as defined in any of claims 1 to 15, wherein the fluid impervious layer (42) comprises a film having a haze value greater than 10%, such as greater than 30% and has an opacity of 50% for greater.

**20.** A rolled absorbent product as defined in claim 1, wherein:

said fluid absorbent layer contains cellulosic fibers; and
said fluids impervious layer (42) comprises a film made from a polymeric material, the film having a thickness of from 0.75 mils (19 μm) 50 mils (1.27 mm) the polymeric material having a melting point of greater than about 165°C.

21. A rolled absorbent product as defined in claim 20, wherein the fluid absorbent layer (44) comprises a hydroentangled web that has a basis weight of from 50 gsm to 125 gsm.

22. A rolled absorbent product as defined in claim 21, wherein the hydroentangled web has an equivalent circular diameter of at least 1,000 microns and has an equivalent hydraulic diameter of at least 900 microns.

23. A rolled absorbent product as defined in any of claims 20 to 22, wherein the fluid absorbent layer (44) has a geometric mean tensile modulus of 12 kg or less, such as 8 kg or less.

24. A rolled absorbent product as defined in any of claims 20 to 23, said sheet (40) has a cut resistance of between 12 and 27 kgf/cm and the film has a coefficient of friction value of between 1 and 3.

25. A rolled absorbent product as defined in any of claims 20 to 24, further comprising a pattern of an adhesive material applied to the fluid absorbent layer (44), the pattern of the fluid adhesive material improving the cut resistance of the laminate.

**Patentansprüche**

1. Ein gerolltes absorbierendes Produkt, welches eine Vielzahl von spiralförmig gewickelten, miteinander verbundenen, flüssigkeitabsorbierenden Blättern (40) umfasst, wobei die Blätter (40) enthalten:

   eine erste flüssigkeitsabsorbierende Schicht (44);
   eine zweite flüssigkeitsundurchlässige Schicht (42); und
   eine obere Schicht (46), welche ein flüssigkeitsundurchlässiges Blatt mit Öffnungen umfasst;
   **dadurch gekennzeichnet, dass**:
   Fasern der absorbierenden Schicht (44) die Öffnungen der oberen Schicht (46) füllen oder teilweise füllen.

2. Das gerollte absorbierende Produkt gemäß Anspruch 1, wobei die Blätter (40) eine Blattdicke von 6" (15,24 cm) bis 14" (35,56 cm) und einen Rollendurchmesser von 3" (7,62 cm) bis 8" (20,32 cm) aufweisen.

3. Das gerollte absorbierende Produkt gemäß Anspruch 1 oder 2, wobei die Blätter (40) ein Flächengewicht von weniger als 150 g/m² aufweisen.

4. Das gerollte absorbierende Produkt gemäß einem der Ansprüche 1 bis 3, wobei die erste flüssigkeitsabsorbierende Schicht (44) eine Flüssigkeitsabsorptionskapazität von mindestens 4 g/g aufweist.

5. Das gerollte absorbierende Produkt gemäß einem der vorherigen Ansprüche, wobei die Blätter (40) eine Stärke von weniger als 800 Mikrometer (31,5 Mil) aufweisen.

6. Das gerollte absorbierende Produkt gemäß einem der vorherigen Ansprüche, wobei die erste Schicht (44) der Blätter (40) einen HST-Wert von weniger als 5 Sekunden aufweist und die zweite Schicht (42) der Blätter (40) einen HST-Wert von mehr als 1 Minute, wie zum Beispiel mehr als 2 Minuten, aufweist.

7. Das gerollte absorbierende Produkt gemäß einem der vorherigen Ansprüche, wobei die flüssigkeitsabsorbierenden Blätter (40) eine Stärke von ungefähr 40 Mikrometer bis ungefähr 800 Mikrometern aufweisen und ein Flächengewicht von 5 g/m² bis 90 g/m² aufweisen.

8. Das gerollte absorbierende Produkt gemäß einem der vorherigen Ansprüche, wobei jedes flüssigkeitsabsorbierende Blatt (40) ein Laminat umfasst, wobei die flüssigkeitsabsorbierende Schicht (44) eine erste Lage des Laminats umfasst und die flüssigkeitsundurchlässige Schicht (42) eine zweite Lage des Laminats umfasst.

9. Das gerollte absorbierende Produkt gemäß einem der vorherigen Ansprüche, wobei:

   die flüssigkeitsabsorbierende Schicht (44) zwischen der flüssigkeitsundurchlässigen Schicht (42) und der Schicht mit Öffnungen (46) angeordnet ist;

wobei die Schicht mit Öffnungen (46) eine Dicke von 4 Mil (0,01 cm) oder weniger aufweist;

wobei die Schicht mit Öffnungen (46) Öffnungen enthält, welche eine Fläche von mindestens 0,5 mm$^2$ aufweisen; und

wobei die Schicht mit Öffnungen ein Verhältnis von Bereichen mit Öffnungen zu Bereichen ohne Öffnungen von ungefähr 0,1 bis 0,9 aufweist.

10. Das gerollte absorbierende Produkt gemäß einem der vorherigen Ansprüche, wobei die flüssigkeitsabsorbierenden Blätter (40) durch eine Perforationslinie getrennt sind.

11. Das gerollte absorbierende Produkt gemäß einem der vorherigen Ansprüche, welches des Weiteren einen Behälter (82) umfasst, welcher die spiralförmig gewickelten, flüssigkeitsabsorbierenden Blätter (40) enthält, wobei der Behälter (82) eine Schneidekante (84) enthält zum Zertrennen des gerollten absorbierenden Produktes in die flüssigkeitsabsorbierenden Blätter (40).

12. Das gerollte absorbierende Produkt gemäß einem der vorherigen Ansprüche, wobei die flüssigkeitsundurchlässige Schicht einen Polymerfilm umfasst, welcher eine Dicke von 0,05 Mil (1,3 x 10$^{-4}$ cm) bis 4 Mil (0,01 cm) und ein Flächengewicht von 5 g/m$^2$ bis 30 g/m$^2$ aufweist.

13. Das gerollte absorbierende Produkt gemäß einem der vorherigen Ansprüche, wobei die flüssigkeitsabsorbierende Schicht (44) ein Tissuegewebe mit einer oder mehreren Lagen umfasst, und wobei die flüssigkeitsundurchlässige Schicht einen Film umfasst.

14. Das gerollte absorbierende Produkt gemäß Anspruch 13, wobei das Tissuegewebe eine gekreppte, Durchluftgetrocknete Bahn oder eine nicht-gekreppte Durchluft-getrocknete Bahn umfasst.

15. Das gerollte absorbierende Produkt gemäß Anspruch 13 oder 14, wobei die flüssigkeitsabsorbierende Schicht (44) eine spezifische Faserwasserabsorptionskapazität von 9 Gramm pro Gramm Faser oder mehr aufweist.

16. Das gerollte absorbierende Produkt gemäß einem der Ansprüche 1 bis 11, wobei die flüssigkeitsundurchlässige Schicht (42) eine Vliesbahn umfasst.

17. Das gerollte absorbierende Produkt gemäß einem der Ansprüche 1 bis 12, wobei die flüssigkeitsabsorbierende Schicht (44) eine nicht-gekreppte, Durchluft-getrocknete Tissuebahn, eine gedruckte gekreppte Tissuebahn, eine luftgelegte Bahn, eine hydro-verwickelte Bahn oder eine Coform-Bahn umfasst.

18. Das gerollte absorbierende Produkt gemäß einem der vorherigen Ansprüche, wobei die flüssigkeitsabsorbierenden Blätter (40) einen Umfang aufweisen und wobei die Blätter (40) des Weiteren eine Flüssigkeitsbarriere (76) umfassen, welche um mindestens einen Teil des Umfangs jedes Blattes (40) angeordnet ist.

19. Das gerollte absorbierende Produkt gemäß einem der Ansprüche 1 bis 15, wobei die flüssigkeitsundurchlässige Schicht (42) einen Film umfasst, welcher einen Trübungswert von mehr als 10%, wie zum Beispiel mehr als 30%, aufweist, und welcher eine Opazität von 50% oder mehr aufweist.

20. Das gerollte absorbierende Produkt gemäß Anspruch 1, wobei:

die flüssigkeitsabsorbierende Schicht zellulosische Fasern umfasst; und

die flüssigkeitsundurchlässige Schicht (42) einen Film umfasst, welcher aus einem Polymermaterial hergestellt ist, wobei der Film eine Dicke von 0,75 Mil bis (19 $\mu$m) 50 Mil (1,27 mm) aufweist, wobei das Polymermaterial einen Schmelzpunkt von mehr als ungefähr 165 °C aufweist.

21. Das gerollte absorbierende Produkt gemäß Anspruch 20, wobei die flüssigkeitsabsorbierende Schicht (44) eine hydro-verwickelte Bahn umfasst, welche ein Flächengewicht von 50 g/m$^2$ bis 125 g/m$^2$ aufweist.

22. Das gerollte absorbierende Produkt gemäß Anspruch 21, wobei die hydro-verwickelte Bahn einen zirkularen Äquivalentdurchmesser von mindestens 1.000 Mikrometern aufweist und einen hydraulischen Äquivalentdurchmesser von mindestens 900 Mikrometern aufweist.

**23.** Das gerollte absorbierende Produkt gemäß einem der Ansprüche 20 bis 22, wobei die flüssigkeitsabsorbierende Schicht (44) ein geometrisches Mittelzugfestigkeitsmodul von 12 kg oder weniger, wie zum Beispiel 8 kg oder weniger, aufweist.

**24.** Das gerollte absorbierende Produkt gemäß einem der Ansprüche 20 bis 23, wobei das Blatt (40) eine Schnittfestigkeit von zwischen 12 und 27 kp/cm aufweist und der Film einen Reibungskoeffizientenwert von zwischen 1 und 3 aufweist.

**25.** Das gerollte absorbierende Produkt gemäß einem der Ansprüche 20 bis 24, welches des Weiteren ein Muster eines Haftmaterials umfasst, welches auf die flüssigkeitsabsorbierende Schicht (44) aufgebracht ist, wobei das Muster des flüssigen Haftmaterials die Schnittfestigkeit des Laminats verbessert.

**Revendications**

**1.** Produit absorbant enroulé comprenant une série de feuilles (40) absorbant les fluides, interconnectées et enroulées en spirale, les feuilles (40) incluant :

une première couche (44) absorbant les fluides ;
une seconde couche (42) imperméable aux fluides ; et
une couche supérieure (16) comprenant une feuille perforée imperméable aux liquides ;
**caractérisé en ce que**
des fibres de la couche absorbante (44) remplissent, ou remplissent partiellement, les orifices de la feuille supérieure (46).

**2.** Produit absorbant enroulé tel que défini dans la revendication 1, dans lequel les feuilles (40) ont une largeur de feuille comprise entre 6 pouces (15,24 cm) et 14 pouces (35,56 cm) et un diamètre de rouleau compris entre 3 pouces (7,62 cm) et 8 pouces (20,32 cm).

**3.** Produit absorbant enroulé tel que défini dans la revendication 1 ou 2, dans lequel les feuilles (40) ont une surface massique inférieure à 150 g/m$^2$.

**4.** Produit absorbant enroulé tel que défini dans l'une quelconque des revendications 1 à 3, dans lequel la première couche (44) absorbant les fluides a une capacité d'absorption des liquides d'au moins 4 g/g.

**5.** Produit absorbant enroulé tel que défini dans l'une quelconque des revendications précédentes, dans lequel les feuilles (40) ont une épaisseur moyenne inférieure à 800 microns (31,5 millièmes de pouce).

**6.** Produit absorbant enroulé tel que défini dans l'une quelconque des revendications précédentes, dans lequel la première couche (44) des feuilles (40) a une valeur HST inférieure à environ 5 secondes et la seconde couche (42) des feuilles (40) a une valeur HST supérieure à 1 minute, telle que supérieure à 2 minutes.

**7.** Produit absorbant enroulé tel que défini dans l'une quelconque des revendications précédentes, dans lequel les feuilles (40) absorbant les fluides ont une épaisseur moyenne comprise entre environ 40 microns et environ 800 microns et ont une surface massique comprise entre 5 g/m$^2$ et 90 g/m$^2$.

**8.** Produit absorbant enroulé tel que défini dans l'une quelconque des revendications précédentes, dans lequel chaque feuille (40) absorbant les fluides comprend un stratifié, la couche (44) absorbant les fluides constituant un premier pli du stratifié et la couche (42) imperméable aux fluides constituant un second pli du stratifié.

**9.** Produit absorbant enroulé tel que défini dans l'une quelconque des revendications précédentes, dans lequel :

la couche (44) absorbant les fluides est positionnée entre la couche (42) imperméable aux fluides et la couche perforée (46) ;
ladite couche perforée (46) a une épaisseur de 4 millièmes de pouce (0,01 cm) ou moins ;
la couche perforée (46) présente des orifices ayant une superficie d'au moins 0,5 mm$^2$ ; et
la couche perforée a un rapport entre "superficie perforée" et "superficie non perforée" d'environ 0,1 à 0,9.

**10.** Produit absorbant enroulé tel que défini dans l'une quelconque des revendications précédentes, dans lequel les feuilles (40) absorbant les fluides sont séparées par une ligne de perforations.

11. Produit absorbant enroulé tel que défini dans l'une quelconque des revendications précédentes, comprenant, en outre, un récipient (82) qui contient les feuilles (40) absorbant les fluides, enroulées en spirale, le récipient (82) incluant une arête de coupe (84) pour sectionner le produit absorbant enroulé en feuilles (40) absorbant les fluides.

12. Produit absorbant enroulé tel que défini dans l'une quelconque des revendications précédentes, dans lequel la couche imperméable aux fluides comprend un film polymère ayant une épaisseur comprise entre 0,05 millième de pouce (1,3 x 10$^{-4}$ cm) et 4 millièmes de pouce (0,01 cm) et une surface massique comprise entre 5 g/m$^2$ et 30 g/m$^2$.

13. Produit absorbant enroulé tel que défini dans l'une quelconque des revendications précédentes, dans lequel la couche (44) absorbant les fluides comprend un voile de papier mousseline ayant un ou plusieurs plis et la couche imperméable aux fluides comprend un film.

14. Produit absorbant enroulé tel que défini dans la revendication 13, dans lequel le voile de papier mousseline comprend un voile séché par soufflage transversal d'air, crêpé, ou un voile séché par soufflage transversal d'air, non crêpé.

15. Produit absorbant enroulé tel que défini dans la revendication 13 ou 14, dans lequel la couche (44) absorbant les fluides a une capacité spécifique d'absorption de l'eau par les fibres de 9 grammes par gramme de fibre ou plus.

16. Produit absorbant enroulé tel que défini dans l'une quelconque des revendications 1 à 11, dans lequel la couche (42) imperméable aux fluides comprend un voile non-tissé.

17. Produit absorbant enroulé tel que défini dans l'une quelconque des revendications 1 à 12, dans lequel la couche (44) absorbant les fluides comprend un voile de papier mousseline séché par soufflage transversal d'air, non crêpé, un voile de papier mousseline crêpé par impression, un voile obtenu par voie aérodynamique, un voile hydrolié ou un voile coformé.

18. Produit absorbant enroulé tel que défini dans l'une quelconque des revendications précédentes, dans lequel les feuilles (40) absorbant les fluides incluent un périmètre et dans lequel les feuilles (40) comprennent, en outre, une barrière aux fluides (76) positionnée autour d'au moins une portion du périmètre de chaque feuille (40).

19. Produit absorbant enroulé tel que défini dans l'une quelconque des revendications 1 à 15, dans lequel la couche (42) imperméable aux fluides comprend un film ayant une valeur de turbidité supérieure à 10 %, telle que supérieure à 30 %, et une opacité de 50 % ou plus.

20. Produit absorbant enroulé tel que défini dans la revendication 1, dans lequel :

   ladite couche absorbant les fluides contient des fibres cellulosiques ; et
   ladite couche (42) imperméable aux fluides comprend un film fait d'un matériau polymère, le film ayant une épaisseur allant de 0,75 millième de pouce (19 $\mu$m) à 50 millièmes de pouce (1,27 mm), le matériau polymère ayant un point de fusion supérieur à environ 165°C.

21. Produit absorbant enroulé tel que défini dans la revendication 20, dans lequel la couche (44) absorbant les fluides comprend un voile hydrolié qui a une surface massique comprise entre 50 g/m$^2$ et 125 g/m$^2$.

22. Produit absorbant enroulé tel que défini dans la revendication 21, dans lequel le voile hydrolié a un diamètre circulaire équivalent d'au moins 1000 microns et un diamètre hydraulique équivalent d'au moins 800 microns.

23. Produit absorbant enroulé tel que défini dans l'une quelconque des revendications 20 à 22, dans lequel la couche (44) absorbant les fluides a un module de traction (moyenne géométrique) de 12 kg ou moins, tel que de 8 kg ou moins.

24. Produit absorbant enroulé tel que défini dans l'une quelconque des revendications 20 à 23, ladite feuille ayant une résistance à la coupure comprise entre 12 et 27 kgf/cm et le film a une valeur de coefficient de friction comprise entre 1 et 3.

25. Produit absorbant enroulé tel que défini dans l'une quelconque des revendications 20 à 24, comprenant, en outre, un motif d'un matériau adhésif appliqué sur la couche (44) absorbant les fluides, le motif de matériau adhésif améliorant la résistance à la coupure du stratifié.

**FIG. 1**

10

14

12

**FIG. 2**

20

24

22

**FIG. 3**

40

FIG. 4

30

FIG. 5

**50**

**FIG. 6**

54

52

56

**86**

**80**

**84**

**82**

**80**

**FIG. 7**

60

64

66

62

**FIG. 8**

70

76

76

74

72

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0228577 A1
- US 5672248 A
- US 5656132 A
- US 6120642 A
- US 6096169 A
- US 6197154 B
- US 6143135 A
- US 19278102 A
- US 10447321 B
- US 10326915 B
- US 10382222 B
- US 10319415 B
- US 10654219 B
- US 10654289 B
- US 10749475 B
- US 5284703 A
- US 4340563 A, Appel
- US 3692618 A, Dorschner
- US 3802817 A, Matsuki
- US 3338992 A
- US 3341394 A, Kinney
- US 3502763 A, Hartman
- US 3542615 A, Dobo
- US 5382400 A, Pike
- US 6203669 B, Marmon
- US 5759926 A, Pike
- US 4100324 A, Anderson
- US 680879082 B
- US 3700623 A, Keim
- US 3772076 A, Keim
- US 3855158 A, Petrovich
- US 3899388 A, Petrovich
- US 4129528 A, Petrovich
- US 4147586 A, Petrovich
- US 4222921 A, van Eenam
- US 3879257 A, Gentile
- US 101319415 B
- US 6383615 B